Europäisches Patentamt

European Patent Office

Office européen des brevets

(19)

(11) Numéro de publication: **0 140 803**
**B1**

(12) **FASCICULE DE BREVET EUROPÉEN**

(45) Date de publication du fascicule du brevet:
14.01.87

(51) Int. Cl.⁴: **C 01 B  15/10**

(21) Numéro de dépôt: **84420165.7**

(22) Date de dépôt: **05.10.84**

(54) Nouveau procédé de fabrication de percarbonate de sodium de faible densité apparente.

(30) Priorité: **07.10.83  FR 8316010**

(43) Date de publication de la demande:
**08.05.85 Bulletin 85/19**

(45) Mention de la délivrance du brevet:
**14.01.87 Bulletin 87/3**

(84) Etats contractants désignés:
**AT BE DE FR GB IT**

(56) Documents cité:
**FR-A-2 197 811**

**CHEMICAL ENGINEERING, vol. 89, no. 20, octobre 1982, pages 125-127, New York, USA; P.E. HUBBLE: "Consider microwave drying"**

(73) Titulaire: **ATOCHEM, 4 & 8, Cours Michelet La Défense 10, F-92800 Puteaux (FR)**

(72) Inventeur: **Lecouls, Henri, 7 avenue Beauregard, F-69230 Saint- Genis- Laval (FR)**
Inventeur: **Audry, Richard, 41 rue Francisque Jomard, F-69600 Oullins (FR)**
Inventeur: **Perdriau, René, 35 rue de Cuire, F-69004 Lyon (FR)**

## Description

La présente invention concerne un nouveau procédé de fabrication de percarbonate de sodium stable de faible densité apparente.

Le percarbonate de sodium couramment disponible sur le marché a une densité apparente comprise entre 0,8 et 0,g g/cm³. Les lessiviers ont émis le désir de disposer d'un percarbonate de sodium ayant une faible densité apparente, comprise par exemple entre environ 0,6 et 0,8 g/cm³.

La présente invention répond à un tel objet et fournit un procédé de préparation de percarbonate de sodium stable de faible densité apparente à partir de percarbonate de sodium humide consistant à placer ce dernier en couche mince, par exemple d'èpaisseur comprise entre environ 1 et 4 cm, sur un tapis roulant défilant dans un four à micro ondes à rayonnement électromagnétique dont la fréquence est choisie parmi les HF de 1 MHz à 300 MHz et les UHF de 300 MHz à 30 000 MHz.

La durée d'exposition du produit au rayonrement sera déterminée par l'homme de l'art en fonction des divers paramètres tels la puissance du four, le taux d'humidité initial, etc. ..., afin d'éviter une perte sensible en oxygène actif.

Par exemple, pour un four de 11,2 kw et un percarbonate de sodium humide de départ ayant un taux d'humidité égal à environ 16 % en poids, on ne doit pas dépasser une durée d'exposition d'environ 10 mn.

Il est également possible de faire varier la puissance de chauffe en cours d'opération.

Le percarbonate de sodium humide de départ peut être préparé par tout moyen approprié, sans que cela constitue une limitation à l'invention. Il peut être préparé par réaction de carbonate de sodium monohydraté, de silicate de magnésium et de peroxyde d'hydrogène contenant de l'acide èthylénediaminetétracétique (EDTA).

Le procédé de la présente invention permet d'obtenir un percarbonate de sodium ayant une bonne stabilité et une faible densité apparente.

Les exemples suivants illustrent l'invention sans la limiter.

## Exemples

### Exemple preliminaire
Préparation du percarbonate de sodium humide de départ.

On a chargé dans un' mélangeur de 1 m3 400 kg de carbonate de sodium monohydraté ayant une densité apparente de 1,3 g/cm³ et on a ajouté 6,1 kg de silicate de magnésium. On a ensuite alimenté en 120 mn 223 kg de peroxyde d'hydrogène, titrant 70 %, contenant 1,4 % en poids d'EDTA (sous forme de sel disodique de l'acide éthylène diamine tétracétique).

La température de la masse réactionnelle reste inférieure à 50°C.

On recueille au bout de 2 h le percarbonate de sodium humide.

### Exemple 1 (comparatif)

On a effectué sur 200 g du produit humide préparé selon l'exemple préliminaire ci-dessus un séchage dans un séchoir à lit fluidisé alimenté par de l'air chaud à 110°C.

On a obtenu un produit ayant une densité apparente de 0,88 g/cm³ et titrant 13,7 % en oxygène actif.

### Exemples 2 à 5

On a placé 200 g du produit humide préparé selon l'exemple préliminaire ci-dessus en une couche d'épaisseur égale à environ 2 cm sur un tapis roulant défilant dans un four à micro ondes ayant une fréquence micro ondes de 2450 ± 25 MHz et disposant de deux puissances de chauffe: 300 et 600 W.    •

Les résultats sont indiqués dans le tableau ci-après.

| Exemples | | Produit humide de départ (ex.préliminaire) | 2 | 3 | 4 | 5 |
|---|---|---|---|---|---|---|
| Durée de chauffe (mn) | 600 W | | 0 | 1' | 2' | 3' |
| | 300 W | | 5' | 6' | 4' | 4' |
| Perte de poids % | | | 16,75 | 18 | 18 | 18 |
| %  Oxygène actif | | 11,6 | 13,3 | 13,37 | 13,44 | 13,38 |
| %  $H_2O_2$ | | 24,7 | 28,2 | 28,4 | 28,6 | 28,4 |
| %  $Na_2CO_3$ | | 57,4 | 69,6 | 70,2 | 69,9 | 69,7 |
| %  $H_2O$ + Adj.* | | 17,9 | 2,2 | 1,4 | 1,5 | 1,9 |
| %  Oxygène actif/ $Na_2CO_3$ | | 0,202 | 0,190 | 0,191 | 0,192 | 0,192 |
| Densité apparente du produit final | | | 0,70 | 0,68 | 0,68 | 0,66 |

* Adj.: silicate de magnésium + EDTA (sous forme de sel disodique).

Les exemples r à 3 selon l'invention conduisent a un percarbonate de sodium ayant une densité apparente (comprise entre 0,66 et 0,70) beaucoup plus faible que celle du percarbonate de sodium (0,88) de l'exemple 1 préparé selon une technique de l'art antérieur.

**Revendications**

1. Procédé de préparation de percarbonate de sodium stable de faible densité apparente consistant à placer du percarbonate de sodium humide en couche mince sur un tapis roulant défilant dans un four à micro ondes à rayonnement électromagnétique dont la fréquence est choisie parmi les HF de 1 MHz à 300 MHz et les UHF de 300 MHz à 30 000 MHz.

2. Procédé selon la revendication 1 dans lequel on fait varier la puissance de chauffe en cours d'opération.

3. Procédé selon l'une des revendications 1 et 2 dans lequel le percarbonate de sodium humide contient du silicate de magnésium et de l'acide éthylènediaminetétracétique.

**Patentansprüche**

1. Verfahren zur Herstellung von stabilem Natriumpercarbonat geringer Rohdichte, bei dem man eine dünne Schicht feuchtem Natriumpercarbonat auf ein Förderband legt, das durch einen Mikrowellenofen mit elektromagnetischen Strahlen läuft, deren HF-Frequenz zwischen 1 MHz und 300 MHz und deren UHF-Frequenz zwischen 300 MHz und 30 000 MHz gewählt wird.

2. Verfahren nach Anspruch 1, bei dem die Heizleistung während der Behandlung geändert wird.

3. Verfahren nach einem der Ansprüche 1 oder 2, bei dem das feuchte Natriumpercarbonat Magnesiumsilicat und Äthylendiamintetraacetat enthält.

**Claims**

1. Process for the preparation of stable sodium perbonate of low apparent density, consisting in placing ist sodium percarbonate as a thin layer on a conveyor lt travelling through an oven containing microwaves of electromagnetic radiation whose frequency is chosen om HF of 1 MHz to 300 MHz and UHF of 300 MHz to 30,000 z.

2. Process according to Claim 1, in which the heating wer is varied during the operation.

3. Process according to either of Claims 1 and 2, in ich the moist sodium percarbonate contains magnesium licate and ethylenediaminetetraacetic acid.